(19) Europäisches Patentamt
European Patent Office
Office européen des brevets

(11) Publication number: 0 030 753
B1

(12) # EUROPEAN PATENT SPECIFICATION

(45) Date of publication of patent specification: 12.09.84

(51) Int. Cl.[3]: **E 21 B 43/00**, C 09 K 17/00, E 21 B 33/138, C 09 K 7/08, C 09 K 7/02

(21) Application number: 80201131.2

(22) Date of filing: 28.11.80

(54) **Method of consolidating an underground formation.**

(30) Priority: 17.12.79 GB 7943333

(43) Date of publication of application:
24.06.81 Bulletin 81/25

(45) Publication of the grant of the patent:
12.09.84 Bulletin 84/37

(84) Designated Contracting States:
DE IT NL

(56) References cited:
FR-A-2 396 837
GB-A-2 051 179
US-A-3 160 206
US-A-3 743 020
US-A-4 061 191

(73) Proprietor: SHELL INTERNATIONALE RESEARCH MAATSCHAPPIJ B.V.
Carel van Bylandtlaan 30
NL-2596 HR Den Haag (NL)

(72) Inventor: Davies, David Roland
Volmerlaan 6
NL-2288 GD Rijswijk (NL)
Inventor: Richardson, Edwin Allen
c/o Bellaire Research Centre
Houston Texas (US)
Inventor: van Zanten, Marinus
Brunei Shell Petroleum Company Ltd.
Seria (BN)

(74) Representative: Puister, Antonius Tonnis, Mr. et al
P.O. Box 302
NL-2501 CH The Hague (NL)

EP 0 030 753 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a method of consolidating an underground formation. In particular, the present invention relates to a method of consolidating those parts of an underground formation that surround a well or borehole penetrating the formation.

Underground formations comprising fluids such as hydrocarbon fluids (oil and/or gas) or water that are being recovered via the wells penetrating such formations, often comprise layers of unconsolidated or incompletely consolidated formation grains. Such grains (hereinafter also referred to as sand or sand particles) will be torn from the layers by fluid flow passing through the layers to the well, and are likely to obstruct the fluid passages in the well and/or the surface equipment communicating with the well. The tubing in the well may even be locally damaged by the erosive action of sand carried by the fluid streams that impinge on the walls of the tubing.

Numerous techniques for consolidating such sand-producing formations have already been proposed in the past, and a number of these techniques have been proven successful in the field. The consolidating agents that are used in these techniques are of widely differing compositions, such as various types of resinous materials, water glass compositions, aluminium oxide cementing materials, and silicon halide compounds.

The present invention relates in particular to formation consolidating treatments using silicon halide compounds as consolidating agent. These agents have been found to be easy in handling in the field. By a simple injection technique, the silicon halide compound can be injected either in gaseous or in liquid form down the well unto the formation parts to be treated. It is imperative that water is present around the contact points of adjacent sand grains in the formation parts into which the silicon halogen compound is injected. The following reaction will then take place:

$$SiCl_4 + 2H_2O \rightarrow SiO_2 + 4HCl,$$

and the amorphous silicon dioxide formed by this reaction will bond the formation grains together, thereby increasing the compressive strength of the formation parts. It will be appreciated that in order to retain a sufficient permeability of the consolidated formation parts, the water should be present therein in relatively small quantities.

A formation consolidating treatment wherein a silicon halide compound in the liquid phase is passed through the formation parts to be treated is described in USA patent specification 3,055,426 (inventors: Kerver, Holland and Graham; filed 5th February, 1959; granted 25th September, 1962). A treatment wherein the silicon halide consolidating agent is passed through the formation in the gas phase is described in British patent specification 1,536,209 (inventors: Meijs and Davies; filed 12th March, 1976; accepted 19th October, 1978).

As observed already hereinabove, it is imperative that water is present around the contact points of adjacent sand particles of formations that are to be consolidated by means of a silicon halide compound. In those formations where the surface of the sand particles is oil-wetted, a pre-treatment has to be carried out to cause the surface of the sand particles to be wet preferentially by water. Such treatment is described in USA patent specification 3,055,426 (inventors: Kerver, Holland and Graham; filed 5th February, 1959; granted 25th September, 1962). The wettability change is obtained by treating the surface of the grains with a surface-active agent suitable for the purpose.

The majority of underground formations that are to be treated for consolidation purposes have, however, water-wettable walls in the pore space thereof, and can consequently be subjected directly to a treatment by means of a silicon halide consolidating agent. Such formations either already contain water adhering to the walls of the pore space, or can easily be wetted by injecting water thereinto via the well or borehole that penetrates the formation parts to be consolidated. When an excessive amount of water is present in the pore space of such a formation, this might lead to an undesirable reduction of permeability after the consolidation. Prior to injecting the consolidating agent, the excess amount of water should therefore be displaced from the formation parts to be consolidated by injecting dry gas through the pore space (in case of a gas-containing formation) or injecting a non-polar liquid therethrough (in case of a liquid-containing formation). The volume of the water displacing fluid is to be chosen such that a sufficient amount of water remains on the wall of the pore space for consolidating purposes without undesirable permeability impairment.

The application of silicon halide compounds as consolidating agent is in particular advantageous since it does not require a pre-treatment of the formation whereby all the water is removed from the pore space of the formation parts to be treated, as is required in almost all other consolidating operations. In these latter operations, the presence of a water film on the surface of the formation particles prevents the consolidating agent from bonding to the surface of the formation particles, which results in a weak consolidation. Water removal from the surface of water-wet formation particles is a costly operation and in practice has been found to be difficult to carry out with the required efficiency, and it will be appreciated that it is found attractive to use a consolidating agent that reacts with water present around the contact points of adjacent sand grains. Such agent can

be placed in the formation by means of a simple operation that can be carried out at relatively low cost.

A detailed study of samples taken from a water-wet formation treated by a gaseous mixture of silicon tetrachloride and nitrogen revealed that—although the grains of the samples were bonded together by silicaceous cement ($SiO_2$)—there was a need for an increase of the compressive strength of the sample. Consolidated formation parts around producing wells, having a high compressive strength are desirable when the well has to produce fluids under high load conditions, since under such conditions sand grains from weakly consolidated formation parts are liable to separate from the formation and cause problems in the well and/or in the surface equipment communicating with the well.

An object of the invention is to provide a method of consolidating those parts of a permeable fluid-containing water-wet underground formation that surround a well penetrating the formation, by passing a silicon halide compound over a water layer adhering to the water-wet walls of the pore space of the formation parts, whereby high compressive strength of the consolidated parts is obtained.

The method according to the invention includes the step of subjecting at least those parts of the pore space walls close to the well to a pre-treatment comprising the injection into the formation of an acid generating silicon halide compound at a weight rate that is beween one fifth and one five hundredth of the weight rate at which the silicon halide compound is injected during the consolidation step.

To explain the method according to the invention in more detail, four Experiments and one Field Test will be described hereinafter by way of example. For the sake of simplicity, all Experiments are based on the following Standard Treatment.

Standard treatment

A glass tube of 36 mm diameter and a length of 12 cm was filled with sand from South West Ampa field in the State of Brunei, the sand particles having dimensions in the range of 200 μm to less than 2μm. The sand was obtained from the sand filters which removed the sand from the produced gas from the South West Ampa field.

Prior to supplying the sand to the tube, the sand particles were wetted by uniformly distributing tap water over the surface thereof, the water being in an amount equal to 5% w of the sand.

The sand pack in the tube was subsequently consolidated by passing a gaseous mixture of $SiCl_4$ and $N_2$ (24% w $SiCl_4$ and 76% w $N_2$) through the pack at a rate of 6 l/min (the rate being calculated over the unobstructed inner cross-sectional area of the tube).

The pack was treated by the dilute $SiCl_4$ over a period of 10 minutes, and after that period, the tube was broken and the consolidated sand pack cut transversely in five equal sections of 3.6 cm. The parts were numbered consecutively 1—5 starting from the injection side of the tube, and the strength of the samples was thereafter determined by means of a Brinell Hardness Number meter. Equipment for measuring Brinell Hardness Number (BHN) has been described by A.C. van der Vlis in the lecture "Rock classification by a simple hardness test" presented on the Second Congress of the International Society of Rock Mechanics (September 1970).

The hardness values indicated in Table A were measured as a result of the Standard Treatment carried out at a temperature of 293 K and a pressure of 1 bar. Results substantially equal to the data of Table A were also obtained when carrying out the Standard Treatment at 373 K and 150 bar.

TABLE A

| Section | BHN (kg/mm²) |
|---|---|
| 1 | 2.2 |
| 2 | 2.5 |
| 3 | 2.4 |
| 4 | 2.9 |
| 5 | 2.5 |

Experiment 1

In this experiment, the injection of the mixture of $SiCl_4$ and $N_2$ (consisting of 24% w $SiCl_4$ and 76% w $N_2$) of the Standard Treatment was preceded by a pretreatment of the sand pack. In this pre-treatment, a gaseous mixture of $SiCl_4$ and $N_2$ consisting of 0.24% w $SiCl_4$ and 99.76% w $N_2$ was passed through the sand pack for a period of 25 min. at a flow rate of 6 l/min. The injection rate of $SiCl_4$ during this pre-treatment period is hence 1/100 of the injection rate of $SiCl_4$ in the consolidating step of the Standard Treatment.

The Brinell hardness test (see Table 1) taken at the end of Experiment 1 showed a considerable increase in compressive strength of the various parts of the sand pack as compared with the results of Table A.

TABLE 1

| Section | BHN (kg/mm²) |
|---|---|
| 1 | 4.5 |
| 2 | 4.9 |
| 3 | 5.2 |
| 4 | 4.9 |
| 5 | 4.7 |

The increase of the Brinell hardness values resulting from the pretreatment step prior to the consolidating step was believed to result from the pre-treatment of the grain surfaces by the hydrochloric acid generated by the $SiCl_4$ reacting with the water present on the sand grains. Since the $SiCl_4$ was injected at a low weight rate during the pretreatment period, the total amount of $SiCl_4$ could react over this period with the water adhering to those sand grains that are present at the entry side of formation. The HCl-vapour generated by this reaction was distributed by the nitrogen gas over the pore space between the sand grains to be consolidated and was dissolved in the water adhering to these sand grains, thereby cleaning the surface of these grains and changing this surface to a foundation on which the amorphous silicon dioxide formed during the subsequent consolidating reaction could firmly adhere, thereby bonding the sand particles together to a mass having a large compressive strength.

To check the above theory which is based on the cleaning action performed by the HCl generated during the pre-treatment, the following experiment was carried out.

Experiment 2

By this experiment, the influence of hydrochloric acid on the compressive strength of consolidated sand packs was investigated. In this experiment the consolidating step of the Standard Treatment was preceded by a pretreatment of an aqueous solution of 15% w HCl. The solution was passed through the sand pack as used in the Standard Treatment, thereby displacing the tap water from the surface of the sand particles. Subsequently, nitrogen gas was passed through the sand pack to displace the major part of the solution until an amount of solution equal to 5% w of the sand pack was left on the surface of the grains. Thereafter, the Standard Treatment was carried out, and the Brinell hardness test showed the results of Table 2.

TABLE 2

| Section | BHN ($kg/mm^2$) |
|---|---|
| 1 | 3.9 |
| 2 | 3.7 |
| 3 | 3.9 |
| 4 | 4.4 |
| 5 | 3.9 |

This experiment was carried out at ambient conditions.

The entry side of Section 1 of Experiment 2 was found to have a Brinell hardness value that was larger than the value found at this location as a result of Experiment 1, and substantially equal to the Brinell hardness value measured at the other end of Section 1 in Experiment 2.

Since the entry side of Section 1 of Experiment 1 had not been contacted by HCl as has the entry side of Section 1 of Experiment 2, it may be concluded that it is the cleaning action performed by the HCl generated during the pre-treatment that improves the quality of the consolidation.

Experiment 3

In Experiment 1 the sand grains were pretreated with hydrochloric acid (that was generated by the reaction of silicon tetrachloride with water present on the sand grains) for a period of 25 min. Thereafter the sand was consolidated by means of the Standard Treatment. In order to better define the time required for the sand to be pre-treated, a series of experiments of the type of Experiment 1 were carried out in which the exposure time of the sand grains to the acid generated by the reaction between $SiCl_4$ and water was varied. This was performed by flushing the pre-treatment gaseous mixture of $SiCl_4$ and $N_2$ (0.24% w and 99.76% w, respectively) through the sand pack at a rate of 6 l/min. for various periods of time followed by the Standard Treatment. The results are shown in Table 3.

TABLE 3

| Pre-treatment period (min.) | Average BHN ($kg/mm^2$) |
|---|---|
| 0 | 2.5 |
| 4 | 2.5 |
| 6 | 2.5 |
| 8 | 2.5 |
| 10 | 3.5 |
| 13 | 4.5 |
| 24 | 4.5 |

(1) The BHN value is given as an average of the BHN values of the five sections into which the sand pack was cut after consolidation.
(2) The experiments were carried out under ambient conditions.

It can be seen that no improvement in strength is observed for treatment times up to 8 min. From 8 min. to 13 min. treatment times there is a rapid improvement in strengths. Treatment times longer than 13 min. did not, in this case, give any better results.

Experiment 4

The procedure described in Experiment 3 was repeated but now under reservoir conditions at 373 K and 150 bar, instead of the ambient conditions reported previously. The results are given in Table 4.

TABLE 4

| Pre-treatment period (min.) | Average BHN ($kg/mm^2$) |
|---|---|
| 0 | 2.5 |
| 5 | 5.0 |
| 10 | 5.0 |
| 24 | 5.0 |

The time required for the generated hydrochloric acid to act on the sand so that optimum results are achieved is less than 5 min. under these conditions of elevated temperature and pressure and has considerably been reduced as compared with the period required to obtain optimal results at the ambient temperature and pressure conditions of Experiment 3.

In previous field applications of a consolidating process using silicon tetrachloride carried down to a gas producing formation by a $N_2$ carrier gas it has been common practice to consolidate the formation rapidly by injecting the silicon tetrachloride at a rate of 10 l/min. The production performance of the well thus treated indicated, however, that the sand was not optimally consolidated as might have been expected from the results obtained by simulating laboratory experiments.

To improve the consolidating treatment, the method according to the present invention was carried out in the following field test.

Field test

During the field test, a pre-treatment was carried out in the formation parts to be consolidated. In the pre-treatment, silicon tetrachloride was injected for a period of 30 minutes at a low rate of $0.25\times10^{-3}$n $m^3$/min. mixed with a carrier gas (consisting of nitrogen), which carrier gas was injected at a rate of 13.4 n $m^3$ min. The $SiCl_4/N_2$ mixture contained 2.2% w $SiCl_4$. The low injection rate of the silicon tetrachloride allowed the silicon tetrachloride to react with the connate water present in the formation pore space, whereby HCl was produced which was dissolved in the water adhering to the sand grains of the formation parts to be consolidated.

After the pre-treatment, a silicon-chloride/nitrogen gas mixture was injected at an increased rate of $0.7\times10^{-3}$n $m^3$/min. $SiCl_4$ and 26.8 n $m^3$ min. $N_2$. The mixture contained 24% w $SiCl_4$. The consolidation period lasted for 150 minutes, whereas the pre-treatment period lasted 30 minutes. The subsequent production period showed that no weak consolidation zone was present at the well bore.

Summarizing it is observed that the present invention is directed to the pre-treatment of a formation pore space with acid generated in the formation, to increase the bonding strength of the silicon dioxide generated during the consolidation process of the formation, when a silicon halogen composition is passed through the formation in gaseous or liquid form. The acid is generated in the formation by injecting a silicon halogen composition into the formation at a weight rate that is between one fifth and one five hundredth of the weight rate at which the silicon halide compound is injected during the consolidation step.

It will be appreciated that any fluid (gas or liquid) used for carrying the silicon halogen compound into the formation should be "dry", that is should not contain more water than can react with 10% w of the injected silicon halogen compound. Further, any excess amount of water in the pore space of the formation parts to be treated should be removed therefrom by passing a gas with a low water vapour content or non-polar liquid (such as condensate which is a hydrocarbon mixture with a volatility equivalent to that of gasoline) through the formation. If the amount of water in the pore space is insufficient for consolidating purposes, a gas containing a mist of water particles is passed through the formation. In an alternative way, a slug of water may be passed through the formation prior to passing a gas with low water vapour content or a non-polar liquid (such as condensate) through the formation.

Slugs of inert fluids may be passed through the formation pore space between successive slugs of treating fluids (including fluids for controlling the water content of the pore space).

Apart from the silicon tetrachloride applied in the Standard Treatment, the Experiments and the Field Test, other silicon halogen compositions such as silicon hexachloride, silicon octochloride and silicon fluoride may be used with equal results.

During the consolidation treatment of the formation the silicon halogen composition may be injected in any concentrations suitable for the purpose. The ratio between the weight injection rates of the silicon tetrachloride during the consolidation treatment and the pre-treatment is between 5:1 and 500:1.

## Claims

1. A method of consolidating those parts of a permeable fluid-containing underground formation that surround a well penetrating the formation, the method including the step of passing a consolidating agent comprising a silicon halide compound over a water layer adhering to the water-wet walls of the pore

space of the formation parts, wherein acid is present in the water layer, characterized in that at least those parts of the pore space close to the well are subjected to a pretreatment comprising the injection into the formation of an acid generating silicon halide compound at a weight rate that is between one fifth and one five hundredth of the weight rate at which the silicon halide compound is injected during the consolidation step.

2. The method according to claim 1, wherein the silicon halide compound is injected into the well by means of a carrier fluid at a predetermined substantially constant concentration during the pre-treatment step and the consolidating step.

3. The method according to claim 1, wherein the silicon halide compound is injected into the well by means of a carrier fluid at a substantially constant rate of the silicon halide compound/carrier fluid mixture during the pretreatment step and the consolidating step.

4. A method according to any one of the claims 1—3, wherein the consolidating agent includes silicon tetrachloride.

**Patentansprüche**

1. Ein Verfahren zur Verfestigung derjenigen Teilbereiche einer durchlässigen Flüssigkeit und/oder Gas (fluid) enthaltenden unterirdischen Schichtenformation, welche ein Borhloch umgeben, das diese Schichtenformation durchdringt, wobei das Verfahren die Maßnahme umfaßt, daß ein Verfestigungsmittel enthaltend eine Siliciumhalogenidverbindung, über eine Wasserschicht, welche an den von Wasser nassen Wänden der Hohlräume der Schichtenteile haftet, geleitet wird, wobei in der Wasserschicht eine Säure vorliegt, dadurch gekennzeichnet, daß zumindest die in der Nähe des Bohrloches befindlichen Teile der Hohlräume einer Vorbehandlung unterworfen werden, umfassend die Einspritzung einer Säure bildenden Siliciumhalogenidverbindung in die Schichtenformation mit einem Gewichtsanteil zwischen 1/5 und 1/500 des Gewicthsanteils, mit welchem die Siliciumhalogenidverbindung in der Verfestigungsstufe eingespritzt wird.

2. Das Verfahren gemäß Anspruch 1, in welchem die Siliciumhalogenidverbindung in das Bohrloch mittels einer Trägerflüssigkeit in einer vorbestimmten, im wesentlichen konstanten Konzentration während der Vorbehandlungs- und der Verfestigungsstufe eingespritzt wird.

3. Das Verfahren gemäß Anspruch 1, in welchem die Siliciumhalogenidverbindung in das Bohrloch mittels einer Trägerflüssigkeit bei einem in wesentlichen konstanten Fließgeschwindigkeit der Siliciumhalogenidverbindung/Trägerflussigkeit-Mischung während der Vorbehandlungs- und der Verfestigungsstufe eingespritzt wird.

4. Das Verfahren gemäß irgendeinem der Ansprüche 1 bis 3, in welchem das Verfestigungsmittel Siliciumtetrachlorid enthält.

**Revendications**

1. Un procédé de consolidation des parties d'une formation souterraine perméable contenant un fluide qui entourent un puits pénétrant dans la formation, le procédé comprenant l'étape qui consiste à faire passer un agent de consolidation comprenant un halogénure de silicium sur une couche aqueuse adhérente aux parois mouillées par l'eau de l'espace poreux des parties de la formation, un acide étant présent dans la couche aqueuse, caractérisé en ce qu'au moins les parties de l'espace poreux proches du puits sont soumises à un traitement préalable comprenant l'injection dans la formation d'un halogénure de silicium générateur d'acide à un débit pondéral compris entre un cinquième et un cinq-centième du débit pondéral auquel l'halogénure de silicium est injecté durant l'étape de consolidation.

2. Un procédé selon la revendication 1, dans lequel l'halogénure de silicium est injecté dans le puits au moyen d'un fluide porteur à une concentration prédéterminée sensiblement constante durant l'étape de traitement préalable et l'étape de consolidation.

3. Un procédé selon la revendication 1, dans lequel l'halogénure de silicium est injecté dans le puits au moyen d'un fluide porteur à un débit sensiblement constant du mélange halogénure de silicium/fluide porteur durant l'étape de traitement préalable et l'étape de consolidation.

4. Un procédé selon l'une qualconque des revendications 1 à 3, dans lequel l'agent de consolidation comprend du tétrachlorure de silicium.